# EUROPÄISCHE PATENTANMELDUNG

(11) **EP 0 957 434 A1**
(43) Veröffentlichungstag der Anmeldung: **17.11.1999**
(21) Anmeldenummer: 99107990.6
(22) Anmeldetag: 22.04.1999
(51) Int. Cl.: G06F 13/24, G06F 13/26

(54) **Interrupt-Anforderungen ausgebende Einrichtung**

(30) Priorität: 12.05.1998 US 76389
(71) Anmelder: SIEMENS AKTIENGESELLSCHAFT, 80333 München (DE)
(72) Erfinder: Barrenscheen, Jens Dr., 81669 München (DE); Fenzl, Gunther, 85635 Höhenkirchen-Siegertsb (DE)

(57) **Zusammenfassung**

Die beschriebene Einrichtung zeichnet sich durch eine Zuordnungseinrichtung aus, durch welche selektiv festlegbar ist, wohin eine jeweilige Interrupt-Anforderung auszugeben ist. Dadurch kann auf verblüffend einfache und elegante Art und Weise individuell auf Interrupt-Anforderungen reagiert werden.

## Beschreibung

Die vorliegende Erfindung betrifft eine Einrichtung gemäß dem Oberbegriff des Patentanspruchs 1, d.h. eine Interrupt-Anforderungen ausgebende Einrichtung.

Derartige Einrichtungen sind insbesondere ereignisgesteuerte Peripheriebaugruppen in programmgesteuerten Systemen, also beispielsweise Netzwerk-Module (z.B. CAN-Module), Analog/Digital-Wandler (ADC) etc. Die Interrupt-Anforderungen werden dabei benötigt, um eine zentrale Steuereinheit wie beispielsweise einen Mikroprozessor, einen Mikrocontroller oder dergleichen im Ansprechen auf bestimmte Ereignisse zur Ausführung einer zugeordneten Reaktion zu veranlassen. Hierzu werden die Interrupt-Anforderungen der Peripheriebaugruppen in der Regel an fest zugeordnete Interrupt-Knoten eines Interrupt-Controllers ausgegeben, und der Interrupt-Controller veranlaßt im Ansprechen darauf die zentrale Steuereinheit zur Ausführung einer dem betreffenden Interrupt-Knoten zugeordneten Interrupt-Routine.

Die besagten Peripheriebaugruppen können dadurch in der Regel mit relativ geringem Aufwand effizient mit der zentralen Steuereinheit kooperieren. Allerdings gilt dies nicht immer und überall. Insbesondere wenn es sich bei dem System um ein Multitasking-System handelt und/oder applikationsspezifische Reaktionen auf die Interrupt-Anforderungen erforderlich oder erwünscht sind, stößt die praktizierte Handhabung von Interrupt-Anforderungen schnell an ihre Grenzen.

Der vorliegenden Erfindung liegt daher die Aufgabe zugrunde, eine Möglichkeit zu finden, die es gestattet, auf Interrupt-Anforderungen flexibel zu reagieren zu können.

Diese Aufgabe wird erfindungsgemäß durch das im kennzeichnenden Teil des Patentanspruchs 1 beanspruchte Merkmal gelöst.

Demnach ist eine Zuordnungseinrichtung vorgesehen, durch welche selektiv festlegbar ist, wohin eine jeweilige Interrupt-Anforderung auszugeben ist.

Dadurch kann die bisherige starre Zuordnung von Interrupt-Anforderungen und Interrupt-Knoten (Interrupt-Routine und Priorität) aufgehoben werden. Die Interrupt-Anforderungen können an beliebige Interrupt-Knoten ausgegeben werden, wodurch sich auf denkbar einfache Weise sowohl auf die Reaktion als auch auf die Priorität Einfluß nehmen läßt. Die Zuordnung von Interrupt-Anforderungen und Interrupt-Knoten ist dabei jederzeit veränderbar, wodurch die Zuordnung von beliebigen Parametern abhängig gemacht werden kann; dadurch ist es unter anderem möglich, task- und/oder applikationsspezifisch auf Interrupt-Anforderungen zu reagieren.

Die flexible Zuordnung läßt sich dabei sehr einfach realisieren, denn es müssen lediglich die die Interrupt-Anforderungen ausgebenden Einrichtungen modifiziert werden; die Interrupt-Knoten, der oder die Interrupt-Controller und die zentrale Steuereinheit bedürfen keiner Modifikation.

Darüber hinaus vereinfacht die flexible Zuordnung auch die Programmierung des Systems: sie wird übersichtlicher und sauberer.

Somit kann auf verblüffend einfache und elegante Art und Weise individuell auf Interrupt-Anforderungen reagiert werden.

Vorteilhafte Weiterbildungen der Erfindung sind den Unteransprüchen, der folgenden Beschreibung und den Figuren entnehmbar.

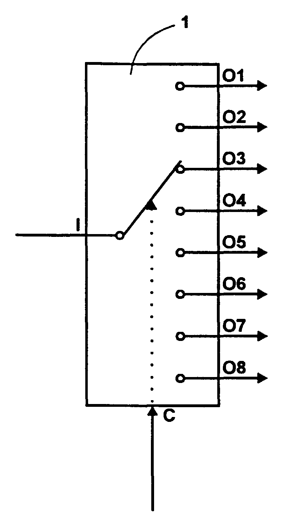

Die Erfindung wird nachfolgend anhand eines Ausführungsbeispiels unter Bezugnahme auf die Figur näher erläutert.

Die Figur zeigt den die Interrupt-Anforderungen ausgebenden Abschnitt einer Peripheriebaugruppe eines programmgesteuerten Systems.

Die im folgenden näher betrachtete Peripheriebaugruppe ist ein in einem programmgesteuerten System enthaltenes Netzwerk-Modul, genauer gesagt ein sogenanntes CAN-Modul. Bei der Peripheriebaugruppe kann sich jedoch auch um eine beliebige andere Interrupt-Anforderungen ausgebende Peripheriebaugruppe wie beispielsweise eine Analog/Digital-Wandler (ADC) handeln.

Die Peripheriebaugruppe ist dazu ausgelegt, eine Vielzahl verschiedener Interrupt-Anforderungen auszugeben. Die Anzahl der verschiedenen Interrupt-Anforderungen kann dabei beliebig groß sein.

Die Peripheriebaugruppe ist im betrachteten Beispiel dazu ausgelegt, eine jeweilige Interrupt-Anforderung wahlweise an eine von acht verschiedenen Stellen auszugeben. Es sei bereits an dieser Stelle erwähnt, daß auf die Zahl "acht" keine Einschränkung besteht; es können beliebig viel mehr oder weniger Stellen sein, an die die Interrupt-Anforderungen ausgegeben werden.

Die Stellen, an die die Interrupt-Anforderungen ausgegeben werden, sind im betrachteten Beispiel Interrupt-Knoten eines oder mehrerer Interrupt-Controller. Auch hierauf besteht keine Einschränkung; die Stellen, an die die Interrupt-Anforderungen ausgegeben werden, können grundsätzlich beliebige Stellen innerhalb oder außerhalb des die Peripheriebaugruppe enthaltenden Systems sein.

Die Ausgabe der Interrupt-Anforderungen an die diesen zugeordneten Stellen erfolgt unter Verwendung einer Zuordnungseinrichtung, die sich dadurch auszeichnet, daß eine flexible Zuordnung der einzelnen Interrupt-Anforderungen (Interruptquellen) und den Stellen, zu denen diese ausgegeben werden (Interrupt-Knoten) erfolgen kann.

Eine mögliche praktische Realisierung einer solchen Anordnung ist in der Figur veranschaulicht; die Zuordnungseinrichtung ist dabei mit dem Bezugszeichen 1 bezeichnet.

Die Zuordnungseinrichtung 1 weist einen Eingangsanschluß I, acht Ausgangsanschlüsse O1 bis O8 und einen Steueranschluß C auf.

Der Eingangsanschluß I ist mit einer oder mehreren Interruptquellen verbunden; über ihn werden der Zuordnungseinrichtung die in der betreffenden Peripheriebaugruppe erzeugten Interrupt-Anforderungen zugeführt.

Die Ausgangsanschlüsse O1 bis O8 sind mit verschiedenen Interrupt-Knoten eines oder mehrerer Interrupt Controller verbunden.

Über den Steueranschluß C wird der Zuordnungseinrichtung 1 ein Steuersignal in Form eines Interruptknoten-Pointers zugeführt. Durch diesen Interruptknoten-Pointer wird bestimmt, über welchen der Ausgangsanschlüsse O1 bis O8 die über den Eingangsanschluß I eingegebenen Interrupt-Anforderungen ausgegeben werden. Dabei können die verschiedenen Interrupt-Anforderungen unabhängig voneinander selektiv über einen beliebigen Ausgangsanschlß ausgegeben werden.

Durch die Ausgebbarkeit der Interrupt-Anforderungen über verschiedene Ausgangsanschlüsse können diese individuell ganz bestimmten Interrupt-Knoten zugeführt werden, wodurch sich sowohl die Interrupt-Routine, die im Ansprechen auf das Auftreten einer jeweiligen Interrupt-Anforderung ausgeführt wird, als auch die Priorität der Reaktion auf die Interrupt-Anforderung im wesentlichen frei festgelegt werden können (jedem Interrupt-Knoten ist eine bestimmte Interrupt-Routine und eine bestimmte Priorität zugeordnet).

Die Interruptknoten-Pointer sind im betrachteten Beispiel 4-Bit-Worte und sind in einer Anzahl vorhanden, die mindestens gleich der Anzahl der verschiedenen Interrupt-Anforderungen ist. Eines der vier Bits dient zur Festlegung, ob die bisherige starre oder die neuartige flexible Zuordnung zwischen Interrupt-Anforderungen und Interrupt-Knoten vorgenommen werden soll; bei der Durchführung der bisherigen starren Zuordnung werden sämtliche Interrupt-Anforderungen über den selben Ausgangsanschluß der Zuordnungseinrichtung ausgegeben (dem selben Interrupt-Knoten zugeführt). Durch die restlichen drei Bits der Interruptknoten-Pointer wird festgelegt, über welchen der Ausgangsanschlüsse der Zuordnungseinrichtung die betreffende Interrupt-Anforderung im Falle der Durchführung der neuartigen flexiblen Zuordnung ausgegeben wird.

Die Interruptknoten-Pointer sind vorzugsweise unabhängig voneinander frei programmierbar. Dadurch läßt sich eine völlige Entkopplung zwischen den die Interrupt-Anforderungen auslösenden Ereignissen und der Art und/oder der Priorität der Reaktion auf die betreffenden Ereignisse erreichen. Die vorgenommenen Zuordnungen zwischen den einzelnen Interrupt-Anforderungen und den Interrupt-Knoten können dabei jederzeit, auch während des Betriebes des Systems, verändert werden, wodurch unter anderem eine applikations- und/oder taskspezifische Zuordnung erfolgen kann. Die individuelle Festlegbarkeit der Interrupt-Handhabung erleichtert trotz der größeren Flexibilität auch die Programmierung des Systems. Die Programmierung wird übersichtlicher und sauberer.

Von der flexiblen Zuordnung zwischen den einzelnen Interrupt-Anforderungen und den Interrupt-Knoten sind ausschließlich die die Interrupt-Anforderungen erzeugenden Peripheriebaugruppen betroffen. Die Interrupt-Knoten, der oder die diese enthaltenden Interrupt Controller und die die Interrupt-Routinen ausführende(n) Einheit(en) bedürfen keinerlei Änderung oder Anpassung; sie können unter Umständen sogar vereinfacht werden, weil die den Interrupt-Knoten zugeordneten Interrupt-Routinen und die Prioritäten nicht mehr von den Interrupt-Anforderungen abhängig gemacht werden müssen.

Durch die beschriebene Vorrichtung kann auf verblüffend einfache und elegante Art und Weise individuell auf Interrupt-Anforderungen reagiert werden.

## Patentansprüche

1. Interrupt-Anforderungen ausgebende Einrichtung,
**gekennzeichnet durch**
eine Zuordnungseinrichtung (1), durch welche selektiv festlegbar ist, wohin eine jeweilige Interrupt-Anforderung auszugeben ist.

2. Einrichtung nach Anspruch 1,
**dadurch gekennzeichnet**,
daß die Stellen, an welche die Interrupt-Anforderungen ausgebbar sind, Interrupt-Knoten eines Interrupt Controllers sind.

3. Einrichtung nach Anspruch 1 oder 2,
**dadurch gekennzeichnet**,
daß die Zuordnungseinrichtung (1) eine Schalteinrichtung ist, mittels welcher eine jeweilige Interrupt-Anforderung selektiv auf einen von mehreren Interrupt-Knoten durchschaltbar ist.

4. Einrichtung nach einem der vorhergehenden Ansprüche,
**dadurch gekennzeichnet**,
daß die Zuordnungseinrichtung (1) über den jeweiligen Interrupt-Anforderungen zugeordnete Interruptknoten-Pointer gesteuert wird.

5. Einrichtung nach Anspruch 4,
**dadurch gekennzeichnet**,
daß die Interruptknoten-Pointer aus einem oder mehreren Bits bestehende Datenworte sind, deren Inhalt angibt, an welchen Interrupt-Knoten die betreffende Interrupt-Anforderung auszugeben ist.

6. Einrichtung nach Anspruch 5,
**dadurch gekennzeichnet**,
daß die Inhalte der Interruptknoten-Pointer unabhängig voneinander individuell veränderbar sind.

7. Einrichtung nach Anspruch 5 oder 6,
**dadurch gekennzeichnet**,
daß die Inhalte der Interruptknoten-Pointer während des Betriebes der die Interrupt-Anforderungen ausgebenden Einrichtung veränderbar sind.
